Europäisches Patentamt

European Patent Office

Office européen des brevets

(19)

(11) Veröffentlichungsnummer: **0 461 481 A2**

## (12) EUROPÄISCHE PATENTANMELDUNG

(21) Anmeldenummer: 91108880.5

(22) Anmeldetag: 30.05.91

(51) Int. Cl.5: **C04B 37/00, C04B 37/02**

(30) Priorität: 12.06.90 DE 4018715

(43) Veröffentlichungstag der Anmeldung:
18.12.91 Patentblatt 91/51

(84) Benannte Vertragsstaaten:
DE GB IT NL SE

(71) Anmelder: **BAYER AG**

**W-5090 Leverkusen 1 Bayerwerk(DE)**

(72) Erfinder: **Jansen, Martin, Prof.Dr.**
**Zur Marterkapelle 93**
**W-5300 Bonn(DE)**
Erfinder: **Eiling, Aloys, Dr.**
**Schmiedestrasse 12**
**W-4630 Bochum(DE)**
Erfinder: **Baldus, Hans-Peter, Dr.**
**Weidenweg 39**
**W-5093 Burscheid(DE)**

(54) Verfahren zur Herstellung von Metall- und/oder Keramik Verbund-Teilen.

(57) Die vorliegende Erfindung betrifft ein Verfahren zur Herstellung von Metall- und/oder Keramik-Verbund-Teilen, wobei als verbindendes Material nanokristalline Materialien eingesetzt werden und durch eine Temperung die Teile verbunden werden.

EP 0 461 481 A2

Die vorliegende Erfindung betrifft ein Verfahren zur Herstellung von Keramik-Verbund-Teilen.

Das Verbinden und Fügen von Keramiken untereinander und Keramik-Metall geschieht nach technisch aufwendigen Verfahren. In der Regel gelingt das Verbinden dabei nur unter Inkaufnahme von gravierenden Abfällen in den mechanischen und vor allem thermomechanischen Eigenschaften des gefügten Teils im Vergleich zu dem einzelnen Halbzeugteil.

Im einfachsten Fall stehen für das Fügen Klebetechniken zur Verfügung. Gängige lufttrocknende Kleber basieren auf Wasserglasformulierungen mit $SiO_2$ und $Al_2O_3$-Füllern.

Soll Keramik mit Metallen in einem konstruktiven Aufbau verbunden werden, kommen Metalle in Form von Pulvern, Folien oder physikalisch bzw. chemisch aufgebrachte, dünne Schichten in Betracht (M.G. Nicholas, R.M. Crispin, Sci. Ceram. 14, 539 (1988) oder W. Roger, in "Ullmann's Encyclopedia of Industrial Chemistry" Vol. A6, VCH-Verlagsgesellschaft, Weinheim (FRG): 1986 pp 43-78).

Wie in der EP-A 146 321 beschrieben, können auch dünne Schichten von Kohlenstoff oder Metall zwischen die zu fügenden Teile gebracht werden. Die Teile werden dann zusammengesintert. Das Verbinden beruht auf Interdiffusion, durch die in der Naht z.B. Silicide erzeugt werden. Für das Verbinden von Metall mit Keramik durch Löten (H. Salmang, H. Scholze in: 'Keramik', Springer Verlag, Berlin: 1983) wurden spezielle binäre, ternäre (z.B. Ag/Cu/Ti) oder quaternäre Lote wie z.B. Cu/In/Ag/Ti entwickelt.

Ähnlich wie bei der Metall-Keramik Verbindung werden derzeit für das Verbinden von Keramik mit Keramik dünne Schichten oder Schichtsysteme untersucht, die bei Temperaturen um 1500 °C durch Interdiffusion die Halbzeugteile verschweißen. Die Möglichkeit, Keramiken unter Druck durch Sintern von Keramikpulver in der Nahtschicht zu verbinden, wird in J Mater. Sci. 15, 1049 (1980) beschrieben. Die erreichten Festigkeiten, die unter Einsatz von grobkristallinem Pulver erreicht wurden, bleiben jedoch auf etwa 10 % der Festigkeit des bulkkeramischen Materials beschränkt.

Der breite Einsatz keramischer Bauteile wird durch Schwachpunkte der Hochleistungskeramik-Bauteile in den mechanischen Eigenschaften, durch höhere Kosten und durch Konstruktionsnachteile gegenüber metallischen Werkstoffen verhindert.

Aufgrund der Härte des keramischen Werkstoffs ist eine Nachbearbeitung sehr kostenintensiv. Aus diesem Grund wird es bei der Fertigung einer Hochleistungskeramik angestrebt, das Formteil möglichst maßgenau anzufertigen; eine Technik, die wegen des prozeßtechnisch bedingten Schwundes während der Herstellung auf einfache Formteile beschränkt bleibt. Häufig ist man dennoch gezwungen, selbst komplizierte Formteile monolithisch zu fertigen und/oder Kompromisse in der Konstruktion einzugehen. Kosten- und konstruktionsseitig wird das potentielle Einsatzfeld von Ingenieurkeramik somit erheblich eingeschränkt.

Die mechanischen Eigenschaften einer Hochleistungskeramik werden bestimmt durch die Größe der zurückbleibenden Poren sowie durch die integrale Restporosität (G. Petzow, Ber. Bunsenges. Phys. Chem. 93 (1989) 1173-1181). Deshalb wird die Verdichtung des Formteils während des keramischen Sinterns bei hochbeanspruchten Werkstücken durch äußeren Druck unterstützt. Eine Technik, die ohne Zusatz von Sinterhilfsmitteln eine brauchbare Keramik zu liefern vermag, ist das Heißpressen von keramischen Pulvern. Diese Technik ist nicht für alle Keramikmaterialien einsetzbar und erlaubt auch nur die Herstellung einfacher Teile. Kompliziertere Teile können zwar durch heißisostatisches Pressen hergestellt werden, aber mit dem Nachteil eines großen technischen Aufwands.

Beim Fügen diskreter keramische Bauteile mit Metall oder anderer Keramik werden von den Sinterphasen in der Naht die mechanischen und physikalischen Eigenschaften der Bulkkeramik nicht erreicht, so daß die tatsächlichen Eigenschaften von Bauteilen, die nach dem Stand der Technik gefügt sind, gegenüber den Eigenschaften des keramischen Basismaterials merklich zurückbleiben.

Die zukünftigen technischen Einsatzfelder der Hochleistungskeramik werden dadurch bestimmt, inwieweit es gelingt, die oben aufgelisteten Probleme zu lösen, und die auf den derzeitigen Fertigungsprozeß zurückzuführenden Nachteile bei den Kosten, in der Formgebung und bei der reproduzierbaren Herstellung der Hochleistungskeramik zu überwinden,

Gewünscht wird eine Technik, die es erlaubt, aus einfachen Formteilen kompliziertere zusammenzusetzen, ohne daß gegenüber einem monolithischen Bauteil Einbußen in den Eigenschaften zu verzeichnen sind.

Es besteht daher die Aufgabe eine Technik zu finden, die es erlaubt, aus Einzelteilen gefertigte Hochleistungskeramikteile herzustellen, die in den Nähten keine oder eine sehr geringe Restporosität aufweisen und ohne die Bildung von schwächenden Phasen keramische Teile mit Metall oder anderen keramischen Teilen verbinden.

Diese Aufgabe wird durch das erfindungsgemäße Verfahren gelöst. Gegenstand dieser Erfindung ist ein Verfahren zur Herstellung von Metall- und/oder Keramik-Verbund-Teilen, welches dadurch gekennzeichnet ist, daß als verbindendes Material nanokristalline Materialien eingesetzt werden und durch eine Temperung die Teile verbunden werden.

Nanokristalline Materialien sind Cluster, die typisch einen Durchmesser zwischen 1 und 100nm aufweisen. Die Herstellung dieser Teilchen erfolgt zum Beispiel durch Verdampfen von Metallen oder Halbleiterelementen in eine Edelgasatmosphäre (C.G. Granqvist und R.A. Buhrman, J. Appl. Phys. 47, 2200 (1976)). Durch Nitridieren oder Oxidieren können während der Verdampfung oder im Anschluß an den Verdampfungsprozeß keramische Verbindungen hergestellt werden (S` Iwama, K. Hayakawa und T. Arizumi, J. Crystal Growth 56, 265 (1982)). Naßchemisch lassen sich solche nanokristallinen Materialien z.B. durch anodische Oxidation herstellen, wie etwa in der EP-A 332 115 beschrieben.

In einer bevorzugten Ausführungsform des erfindungsgemäßen Verfahrens wird die Nahtstelle zwischen den zu verbindenden Teilen vor dem Verbinden mit den nanokristallinen Materialien belegt und die zu verbindenden Teile werden gegeneinandergepreßt.

Das erfindungsgemäße Verfahren nutzt die Duktilität der nanokristallinen Materialien aus, um eine dichte porenfreie Füllung zwischen zwei Formteilen zu erzeugen. Erfindungsgemäß wird die spätere Naht zwischen den beiden zu fügenden Teilen ausreichend dick, bevorzugt zwischen 1 $\mu$m und 1 mm, abhängig von der Rauhigkeit der zu verbindenden Flächen, mit dem nanokristallinen Material belegt, und die Teile werden mit ausreichender Kraft gegeneinander gepreßt. Je nach Kompliziertheit der Form, Abmessung der zu verbindenden Flächen und plastischen Verformbarkeit des nanokristallinen Materials wird der anzuwendende Druck zwischen 0.01 und 2 GPa variieren. Die Eigenschaft von nanokristallinem Material, unter Druckbeanspruchung plastisch zu fließen, und die Ausnutzung dieser Eigenschaften für die Herstellung keramischer Bauteile wird beschrieben in DE-A 3 739 959.

Bevorzugt entspricht das nanokristalline Material der chemischen Zusammensetzung der zu verbindenden Teile, und sollte bevorzugt sinter- und/oder legierungsfähig mit den zu verbindenden Teilen sein.

Um zu verhindern, daß aufgrund der Duktilität das nanokristalline Material aus der Naht herausgepreßt wird, ist es möglich, durch Zusatz von gröberem Pulver, das sinterfähig mit dem nanokristallinen Material ist und vorzugsweise chemisch gleich dem nanokristallinen Material ist, die Dicke der Nahtschicht gezielt einzustellen.

Gemäß einer bevorzugten Ausführungsform des erfindungsgemäßen Verfahren wird also das nanokristalline Material mit gröberem Pulver abgemischt.

Während des Preßvorganges fließt das nanokristalline Material, und es entsteht eine kompakte, porenfreie Zwischenschicht. Tempert man diese Schicht und die angrenzenden Bereiche der Halbzeugteile bei ausreichend hoher Temperatur, so setzt eine starke Diffusion in der Schicht des nanokristallinen Materials und zwischen dieser und den angrenzenden Teilen ein, die zu einer Verschweißung der Teile führt.

Nach dem Verpressen, das zwischen Raumtemperatur und 2/3 der Schmelz- oder Zersetzungstemperatur stattfinden kann, ist die Dichte des Materials in der Naht im Vergleich zur Dichte des kristallinen Materials noch erniedrigt. Das anschließende Sintern unterhalb der Schmelz- bzw. Zersetzungstemperatur (1/2 bis 3/4 des Wertes dieser Temperaturen) führt in dem nanokristallinen Material zu einem Kornwachstum bzw. zu einer schnellen diffusionsgetriebenen Auflösung desselben.

Die Enddichte in der Naht kann ohne Sinterzuschläge durch Tempern ausreichend schnell erreicht werden. Da das Kornwachstum des nanokristallinen Materials mit einem Volumenschwund von typisch 20 % einhergeht, erhält man besonders dichte und mechanisch hoch belastbare Nähte, wenn das Sintern der Naht unter gerichteter Krafteinwirkung geschieht.

Es genügt, die Naht und das Material in der Umgebung der Naht auf eine Temperatur zu bringen, die zur Kristallisation der Nanokristalle führt. Diese Temperatur liegt abhängig von der Größe der nanokristallinen Primärteilchen deutlich unter der Schmelz- oder Zersetzungstemperatur des bulkkeramischen Materials. Typische Werte liegen in der Größenordnung 1/2 bis 3/4 der Schmelz- oder Zersetzungstemperatur der Bulkkeramik.

Die höheren Sintertemperaturen führen zu einer Zunahme der Bereiche in der Bulkkeramik, in die hinein Diffusion aus der nanokristallinen Nahtschicht stattfindet. Generell ist zu beobachten, daß eine deutliche Diffusion in das Bulkmaterial hinein die mechanischen Eigenschaften verbessert.

Dies kann in weiteren bevorzugten Ausführungsformen des erfindungsgemäßen Verfahrens auch dadurch erreicht werden, daß die zu verbindenden Teile über die Sintertemperatur der nanokristallinen Materialien bis zur Sintertemperatur der Metall- und/oder Keramik-Verbund-Teile hinaus erwärmt werden.

Die nanokristallinen Teilchen verbinden demnach makroskopische Teile durch einen Sinterprozeß, in dessen Verlauf sie sich durch Kornwachstum und/oder Diffusion auflösen. Es entsteht ein Hochleistungsbauteil, das dem theoretischen Eigenschaftsprofil des Bulkkeramikmaterials nahekommt, obwohl es aus diskreten Teilen gefertigt ist. Die Problematik des katastrophalen Versagens bei Dauerbelastung, die sich einer meßtechnischen Prüfung entzieht und auf Gefügefehler sowie auf einzelne übergroße Poren zurückgeführt werden kann, tritt aufgrund der Morphologie des nanokristallinen Materials in den Nahtstellen zwischen den Teilen prinzipiell nicht auf.

Durch die Art der Temperaturbehandlung besteht die Möglichkeit, durch Interdiffusion bzw. durch Kornwachstum des nanokristallinen Materials ein keramisches Material zu züchten, das von der eingesetzten Ingenieurkeramik verschieden sein kann.

Diese Möglichkeit der mikroskopischen Mischung und/oder Phasenzüchtung erlaubt die Einstellung der mechanischen, physikalischen und chemischen Eigenschaften und dadurch die Anpassung des Werkstoffes Keramik an spezifische technische Problemstellungen und werkstoffphysikalische Anforderungen. Insbesondere ist es möglich, durch geeignete Wahl des nanokristallinen Materials Verbindungen zwischen Teilen mit unterschiedlichen thermischen Ausdehnungskoeffizienten herzustellen. Das Fügen mit nanokristallinem Material ermöglicht über eine Interdiffusion mit der Bulkkeramik und/oder durch maßgeschneiderte Auswahl des nanokristallinen Materials eine Anpassung unterschiedlicher Eigenschaften dar gefügten Teile, z.B. thermische Ausdehnung.

Bei den derzeit als Hochleistungskeramik eingesetzten Materialien handelt es sich vornehmlich um Oxide, Carbide, Nitride und/oder Boride der Metalle Al, V, Nb, Ta, W, Y, Ti, Zr und der Elemente Si, B und P. Erfindungsgemäß kommen als nanokristalline Materialien für das Verbinden von Keramik ebenfalls die aufgelisteten Verbindungen und Mischungen derselben in Betracht.

Je nach Zusammensetzung der zu fügenden Bauteile kommen geeignete nanokristalline Materialien in Frage, deren Zusammensetzung und Stöchiometrie ähnlich oder gleich der Zusammensetzung und Stöchiometrie der Bauteile ist, oder die eine ausreichende Sinterfähigkeit mit den Bauteilmaterialien aufweisen, und die gleichzeitig die geforderten mechanischen und physikalischen Eigenschaften einhalten.

Dabei ist davon auszugehen, daß die Eigenschaften der gesinterten Nahtschicht gleich denen eines entsprechenden bulkkeramischen Materials sein werden.

Eine besonders bevorzugte Ausführungsform des erfindungsgemäßen Verfahrens besteht somit darin, daß die zu verbindenden Materialien aus gleichem Material oder aus chemisch und/oder morphologisch verschiedenem Material bestehen, während das nanokristalline Material sinterfähig in sich und mit den zu verbindenden Materialien ist.

Für den konstruktiven Verbund von Metall mit Keramik bietet sich der Einsatz von Nanokristallen ebenso an, wie für die Verbindung von Keramik mit Keramik. Eine in der Naht aufgebrachte nanokristalline Zwischenschicht aus nanokristallinen Materialien wird durch Interdiffusion einen allmählichen Übergang zwischen Metall über verschiedenen keramischen Übergangsphasen zur Keramik ausbilden. Gegenüber den herkömmlichen Siliciden als Zwischenschicht sind so beliebige Übergangsschichten in der Naht möglich.

Weiterhin denkbar ist eine Kaltverschweißung von Metallteilen durch angepaßte nanokristalline Metalle. Hier würden sich Nanokristalle insbesondere für das Verbinden sehr unterschiedlicher Metallteile anbieten, die durch konventionelles Verschweißen nicht zu verbinden sind. Weiterhin kann die Verschweißung wegen der hohen Diffusiongeschwindigkeit in den Nanokristallen bei niedrigen Temperaturen durch Temperung oder nach der Reibschweißmethode erfolgen, so daß thermisch induzierte Spannungen in der Naht minimiert werden. Im Bereich der Sintermetalle (z.B. Al-Ti Legierungen) oder auch der Hartstoffe (z.B. WC), die konventionell nicht schweißbar sind, würde eine Verschweißung über Nanokristalle die konstruktive Einbindung ermöglichen bzw. erleichtern.

Die Naht ist charakterisiert durch ein charakteristisches Diffusionsprofil, in dem sich der Übergang zwischen gleichen oder verschiedenen Materialien (einschließlich eingesetzter Sinteradditive) über die Zwischenschicht widerspiegelt. Es ergibt sich sowohl ein charakteristisches Profil der Elementverteilung wie der Korngrößenverteilung, die in Dünnschliffen und Mikrobereichsanalytiken (z.B. TEM, Mikrosonde, EELS) nachweisbar sind.

Das Fügen von Teilen mit Hilfe der erfindungsgemäßen nanokristallinen Materialien bietet eine Reihe von Vorteilen:

Teile aus unterschiedlichen Materialien können durch eine geeignet gewählte Zwischenschicht derart zusammengefügt werden, daß in der Nahtschicht eine Anpassung der thermischen Ausdehnungskoeffizienten stattfindet. Insbesondere die Möglichkeit der Mischung verschiedener nanokristalliner Materialien eröffnet vielfältige Möglichkeiten zur Einstellung der physikalischen Eigenschaften.

Teile, die keine wechselseitige Sinterfähigkeit aufweisen, können durch eine nanokristalline Zwischenschicht, die aus einem dritten Material besteht, das mit beiden Materialien sinterfähig ist, zusammengefügt werden.

Aufgrund der um Größenordnung höheren Sinterfähigkeiten der nanokristallinen Materialien können Teile zusammengefügt werden, die als Bulkmaterial keine Sinterfähigkeit aufweisen, wie z.B. $Si_3N_4$ mit $Si_3N_4$ oder SiC mit $Si_3N_4$.

Die mechanischen und physikalischen Eigenschaften der gefügten Teile sind gleich den Eigenschaften entsprechender monolithischer Bauteile.

**Patentansprüche**

1. Verfahren zur Herstellung von Metall- und/oder Keramik-Verbund-Teilen, dadurch gekennzeichnet, daß als verbindendes Material nanokristalline Materialien eingesetzt werden und durch eine Temperung die Teile verbunden werden.

2. Verfahren gemäß Anspruch 1, dadurch gekennzeichnet, daß die Nahtstellen zwischen den zu verbindenden Teilen vor dem Verbinden mit den nanokristallinen Materialien belegt werden und die zu verbindenden Teile dann gegeneinandergepreßt werden.

3. Verfahren gemäß einem der Ansprüche 1 oder 2, dadurch gekennzeichnet, daß das nanokristalline Material der chemischen Zusammensetzung der zu verbindenden Teile entspricht.

4. Verfahren gemäß einem der Ansprüche 1 oder 2, dadurch gekennzeichnet, daß das nanokristalline Material sinter- und/oder legierungsfähig mit den zu verbindenden Teilen ist.

5. Verfahren gemäß einem oder mehreren der Ansprüche 1 bis 4, dadurch gekennzeichnet, daß das nanokristalline Material mit gröberem Pulver abgemischt ist.

6. Verfahren gemäß einem oder mehreren der Ansprüche 1 bis 5, dadurch gekennzeichnet, daß die Teile unter Druck über die Sintertemperatur der nanokristallinen Materialien hinaus erwärmt werden.

7. Verfahren gemäß einem oder mehreren der Ansprüche 1 bis 5, dadurch gekennzeichnet, daß die zu verbindenden Materialien über die Sintertemperatur der Metall- und/oder Keramik-Verbund-Teile hinaus erwärmt werden.

8. Verfahren gemäß einem oder mehreren der Ansprüche 1 bis 7, dadurch gekennzeichnet, daß die zu verbindenden Materialien aus gleichem Material oder aus chemisch und/oder morphologisch verschiedenem Material bestehen, während das nanokristalline Material sinterfähig in sich und mit den zu verbindenden Materialien ist.